# EUROPEAN PATENT APPLICATION

(11) **EP 4 471 083 A1**
(43) Date of publication of application: **04.12.2024**
(21) Application number: 22923134.5
(22) Date of filing: 26.05.2022
(51) Int. Cl.: C08J 9/28, B01J 20/281

(54) **POLYMER MICROPARTICLE, PREPARATION METHOD THEREFOR AND USE THEREOF**

(30) Priority: 27.01.2022 CN 202210098560
(71) Applicant: Smart Liquid Crystal Technologies Co., Ltd., Suzhou, Jiangsu 215500 (CN)
(72) Inventor: XUE, Jiuzhi, Suzhou, Jiangsu 215500 (CN); WANG, Rui, Suzhou, Jiangsu 215500 (CN); YANG, Min, Suzhou, Jiangsu 215500 (CN)
(74) Representative: Gille Hrabal Partnerschaftsgesellschaft mbB Patentanwälte
(86) International application number: PCT/CN2022/095272
(87) International publication number: WO 2023/142322

(57) **Abstract**

The present application relates to a polymer microparticle, a preparation method therefor and use thereof. The polymer microparticle is formed by cross-linking at least partially cross-linkable polymer materials including rigid nanoparticles, wherein at least one of the rigid nanoparticles has a non-spherical, symmetrical shape in a solution, and the rigid nanoparticles at least partially form a substantially ordered arrangement structure in the polymer microparticle. The polymer microparticle disclosed by the present application, when used as a stationary phase in a chromatographic separation, has excellent mechanical properties and good biocompatibility, and can also effectively improve the separation efficiency.

## Description

This application claims the priority to patent application CN202210098560.X entitled POLYMER MICROPARTICLE, PREPARATION METHOD THEREFOR AND USE THEREOF filed on Jan. 27, 2022, and all its contents are incorporated in this application by reference.

### TECHNICAL FIELD

The invention relates to polymer microparticles with porous structures, and more particularly to polymer microparticles where at least in sections of the microparticles, the constituent molecules or both the constituent molecules and the pore channels are arranged substantially in order, and to a method of manufacturing such polymer microparticles.

### BACKGROUND OF INVENTION

Microparticles comprising inorganic or organic polymer materials or polymer composite materials and having spherical shape with diameters of nanometer to micron are common, and their morphology and internal structure can be diverse, including solid, hollow and porous structures. Such microparticles find wide range of applications in areas including coatings, cosmetics, micro-electronics and the like, more often used in high value-added products such as chromatography media. The most common microspheres include: an inorganic silica microsphere, a microsphere with biomacromolecule or polymers as matrices, and the like. The most widespread use of microspheres, especially agarose biomacromolecule matrix microspheres, is as fillers or biomacromolecule chromatography media in ion exchange chromatography, affinity chromatography, and hydrophobic interaction chromatography.

Given its wide uses and great success in biopharmaceutical separations, the literature on the biomacromolecule microspheres comprising agarose matrices is vast. The earliest related reference includes Hjerten, S. Biochim. Biophys. Acta 1964, 79:393-398; and Bengtsson et al., S. Biochim. Biophys. Acta 1964. 79:399, and the earliest related patent publication about agarose beads includes U.S. Pat. No. 4,647,536, while the earliest patent or academic literature containing polysaccharide microspheres for chromatographic columns appeared earlier. Research suggests that the pore structure of the medium is closely related to the surface contact area between the pore and protein, which also determines the resolution and loading effect, etc. of the separation results of proteins. Therefore, as a medium of the chromatography column, the interior pore size, structure, and size distribution, particle size, their distribution, shape, and mechanical property of the polysaccharide gel beads have a significant effect on separation effect and separation speed. However, as far as can be determined, it is not possible to control the interior pore structure of polysaccharide gel beads by methods such as mechanical stirring, homogeneous emulsification, membrane emulsification, and the like, and in view of its inherent soft characters, the known polysaccharide gel beads are so soft which would lead to poor pressure resistance, so the corresponding chromatography column is confined largely to low-speed biological protein separation application. In addition, the raw material of the most widely used agarose gel beads is extracted from algae by multiple steps, and it is a high-cost raw material that is expensive for large-scale production.

On the other hand, since some of the bioactive substances to be separated are prone to losing activity because of structural changes, which can be attributed to poor tolerance of temperatures, shear forces, and changes in the solvent environment. Because stringent chromatographic conditions are required for bioactive substances, the matrix usually needs excellent mechanical performance, chemical stability, and separation efficiency. Otherwise, it can give rise to denaturation and deterioration of the proteins.

Accordingly, there is a need to provide porous microparticles with increased mechanical integrity whose interior structure and pore distribution are both controllable, whose raw material is readily available, to improve separation efficiency and purification of the chromatography column during the chromatographic separation and decrease the cost of separation.

### DISCLOSURE OF THE INVENTION

This invention aims at providing porous microparticles where, at least sections of the microparticles have internal structural ordering, including molecular orientation and pore structure ordering, and methods making thereof, to meet the above-described needs.

To attain the above object, the application provides a porous polymer microparticle which is formed by crosslinking at least partially cross-linkable oligomer materials, including rigid nanoparticles, wherein at least one of the rigid nanoparticles has a non-spherical shape in a solution, and the rigid nanoparticles at least partially form a substantially ordered structure, such as orientational order in the polymer microparticle. Meanwhile, the inner pores formed by crosslinking, at least in part, basically inherit the same ordered conformation, resulting in a substantially ordered structure at least in part.

The embodiment and purpose of the present application are hereinafter described and illustrated, given by ways of examples combined with systems, tools, and methods. These examples are just exemplary and explanatory rather than limitation. In various embodiments, one or more market requirements have been met by the present invention, while other embodiments are directed to other improvements.

The primary objective of the present application is to provide a porous polymer microparticle, which is formed by crosslinking at least partially cross-linkable oligomer materials, including rigid nanoparticles, and the rigid nanoparticles at least partially form a substantially ordered structure, such as orientational order in the polymer microparticle.

Another object of the present application is to provide a porous polymer microparticle, whose pore structure formed by crosslinking the rigid nanoparticles is a substantially ordered structure, at least in part.

Another object of the present application is to provide a porous polymer microparticle, further comprising polysaccharide compounds for providing pressure resistance and structural support, besides the above rigid nanoparticles for providing ordered structure.

Another object of the present application is to provide a method for preparing the porous polymer microparticle. The aforementioned method can obtain the essential structure of the polymer microparticles provided in the present application.

For the purposes of the application, the application provides a porous polymer microparticle, which is formed by crosslinking at least partially cross-linkable oligomer materials, including rigid nanoparticles, wherein at least one of the rigid nanoparticles has a non-spherical shape in a solution, and the rigid nanoparticles at least partially form a substantially ordered structure, such as orientational order in the polymer microparticle.

As a further improvement of the application, the rigid nanoparticle is a biomacromolecule.

As a further improvement of the application, the polymer microparticles have one or more regions in which rigid nanoparticles are arranged substantially in order, and the molecular arrangement between the plurality of regions may not be correlated, correlated, or partially correlated.

As a further improvement of the application, the shape of the non-spherical rigid nanoparticles are rod-shaped, strip-shaped, sheet-shaped, needle-shaped, or linear with its feature direction along the direction of the longitudinal axis of the molecule.

As a further improvement of the application, the shape of the non-spherical rigid nanoparticles is disk-shaped with its feature direction normal to the disk.

As a further improvement of the application, there is internal structural ordering over the whole polymer microparticles.

As a further improvement of the application, the distribution of the feature direction is any one of substantially along the particle radius direction, along the particle bipolar axis direction, or on a plurality of concentric circles inside the microparticles.

As a further improvement of the application, in a substantially ordered region, the feature direction is substantially parallel, fan-shaped, or spirally arranged.

As a further improvement of the application, at least one member of the biomacromolecules is selected from the group consisting of polypeptide, protein, nucleic acid, polysaccharide, and lipid.

As a further improvement of the application, biomacromolecules with a non-spherical symmetrical shape have or do not have chiral characteristics.

As a further improvement of the application, biomacromolecules with chiral characteristics include left- and right-handed enantiomers of a chiral biomacromolecule.

As a further improvement of the application, biomacromolecules having non-spherical shapes are cellulose nanocrystals or cellulose nanofibers, which are found in abundance in nature and have low cost for extraction.

As a further improvement of the application, the cellulose nanocrystal has a length of 20 -1000 nm and a width of 2-100 nm.

As a further improvement of the application, the aspect ratio of the cellulose nanocrystals in the solution is 2:1 to 200:1.

As a further improvement of the application, the polymer microparticles further comprise a polysaccharide compound having no obvious non-spherical shape in a solution, and the polysaccharide compound and the rigid nanoparticles are copolymerized to form the polymer microparticles.

As a further improvement of the application, at least one member of the polysaccharide compounds is selected from the group consisting of agar, agarose, dextran, starch, chitosan and trehalose.

As a further improvement of the application, the mass ratio of the rigid nanoparticles to the polysaccharide compound is 1:10 -50:1.

As a further improvement of the application, the solid contents of the resulting dispersion is in an amount from 2 % to 90%, by dissolving the rigid nanoparticles and the polysaccharide compound in water.

As a further improvement of the application, the volume of the rigid nanoparticles and the polysaccharide compound account for 1%-10% of the total volume of the polymer microparticles.

As a further improvement of the application, the polymer microparticles further comprise a cross-linking agent, wherein the amount of the cross-linking agent is 10%-100% with respect to the total mass of the biomacromolecule and the polysaccharide compound.

As a further improvement of the application, the cross-linking agent includes one or more selected from the group consisting of an epoxy-based compound, a bis-acid chloride compound, and a halogen compound.

As a further improvement of the application, the epoxy-based compound is selected from the glyceryl ether small molecule organic material.

As a further improvement of the application, the polymer microparticles have a particle size ranging from 1 µm to 500 µm.

On the other hand, the present application also discloses a porous polymer microparticle, the polymer microparticle is at least formed by crosslinking rigid nanoparticles and the interior of the polymer microparticles has a pore structure, wherein at least one of the rigid nanoparticles has a non-spherical shape in a solution, the pore form at least partially a substantially ordered structure and the arrangement direction of the pore is basically consistent with the arrangement direction of the biomacromolecules.

As a further improvement of the application, the rigid nanoparticle is a biomacromolecule.

As a further improvement of the application, the pore diameter is 1-1000 nm.

As a further improvement of the application, at least in a substantially ordered area, at least a portion of the pore and at least a portion of its adjacent one has a certain correlation with the arrangement of their directions and positions.

As a further improvement of the application, at least in a substantially ordered area, at least a portion of the pore is substantially parallel, fan-shaped, or spirally arranged with at least a portion of its adjacent one.

On the other hand, the present application also discloses a method for preparing the aforementioned polymer microparticles, comprising the following steps:
(1) dispersing the rigid nanoparticles into water to form a dispersed phase solution;
(2) dispersing the dispersed phase solution in a continuous phase containing an emulsifier to form emulsion droplets containing the rigid nanoparticles;
(3) adding a cross-linking agent to cross-link the biomacromolecules in the emulsion droplets to form the polymer microparticles.

As a further improvement of the application, the rigid nanoparticle is a biomacromolecule.

As a further improvement of the application, wherein step (1) hereinbefore described further comprises the step of adding a polysaccharide compound.

As a further improvement of the application, the mass concentration of the emulsifier in the continuous phase is 2% -20%.

As a further improvement of the application, the emulsifier comprises one or more selected from the group consisting of Span-type surfactants, tween-type emulsifiers, cetyl PEG and polyglycerol polyricinoleate (PGPR).

As a further improvement of the application, the continuous phase comprises one or more selected from the group consisting of n-hexane, n-hexadecane, liquid paraffin, and soybean oil.

As a further improvement of the application, wherein step (3) hereinbefore described is conducted under basic conditions.

The application also discloses the use of the above-mentioned polymer microparticles as stationary phases for chromatographic separations.

The application also discloses another application scenario of the above-mentioned polymer microparticles, particularly in step(1), no emulsification operation is performed after the dispersed phase solution is formed, the crosslinking agent is directly added for in-situ polymerization, and the obtained product can be used as an integral column stationary phase.

Benefits: according to the polymer microparticles disclosed in the present application, the rigid nanoparticles at least partially form a substantially ordered structure in its interior, so as to form a corresponding pore structure which is at least partially ordered, and the separation effect can be effectively improved when used as a stationary phase for chromatographic separation. Meanwhile, the polymer microparticles are made of rigid nanoparticles having LC alignment and an evenly and radially arranged structure formed in at least some regions inside the microparticles, making the polymer microparticles to have good mechanical properties, and better biocompatibility. Further, the raw materials of the polymer microspheres disclosed in the present application are derived from the most abundant natural resources and the most environmentally friendly, and the most mature nanofiber crystal material in the extraction technology, which can greatly reduce the cost of chromatography consumables.

### BRIEF DESCRIPTION OF THE DRAWINGS

FIG. 1 is a schematic view of a polysaccharide microsphere according to prior art and shows in enlarged scale a detail of a part A of FIG.1;
FIG. 2 comprises three pictures, in which FIG. 2(a) is a schematic view of a rod-shaped structure of biomacromolecules and a structural formula of an example, and FIG. 2(b) is a schematic view of an arch-shaped (banana-shaped) structure of a biomacromolecule and a structural formula of an example, and FIG. 2(c) is a schematic view of a disc-shaped structure of biomacromolecules and a structural formula of an example;
FIG. 3 comprises three pictures, in which FIG. 3(a), (c), (e) and (g) are schematic views of the arrangement of CNC nanorods when the concentration of the CNC dispersion is less than 3%, 3.5% -4%, 4%, and 5%, respectively, and FIG. 3(b), (d), (f) and (h) are crossed polarized microscopy images when the concentration of the CNC dispersion is less than 3%, 3.5% -4%, 4%, and 5%, respectively.
FIG. 4 is a schematic view of a process for forming emulsion droplets of lyotropic liquid crystals.
FIG. 5 shows two binding modes of rigid nanoparticles in polymer microparticles;
FIG. 6 is a schematic view of the arrangement of chirality formed by biomacromolecules in polymer microparticles;
FIG. 7 comprises four pictures, in which FIG. 7(a) is a cross-sectional view of a polymer microparticle disclosed by the present application, and FIG. 7(b) shows in enlarged scale a detail of a part B of FIG.7(a), and FIG. 7(c) shows in enlarged scale a detail of a part C of FIG.7(a), and FIG. 7(d) is the SEM photographs of the polymer microparticles in some embodiments;
FIG. 8 comprises four pictures, in which FIG.8(a) is the radial configuration of the polymer microparticles, and FIG. 8(b) is the bipolar configuration of the polymer microparticles, and FIG. 8(c) is the loop conformation of the polymer microparticles, and FIG.8(d) is the crossed polarized microscopy image of the polymer microparticles with radial configuration;
FIG. 9 shows a block diagram of a method for preparing polymer microparticles according to embodiments;
FIG. 10 comprises six pictures, in which FIG.10(a), (c) and (e) are schematic views of the internal structures of polymer microparticles which have essentially no order, partial order and complete order, respectively, and FIG.10(b), (d) and (f) are the crossed polarized microscopy images of the polymer microparticles which have essentially no order, partial order and complete order, respectively.
FIG. 11 is a schematic view of the emulsion droplet's (a) internal structure of and (b) orthogonal polarization microscope image, which is prepared according to Embodiment 1 of the present application.
FIG. 12 is a crossed polarized microscopy image of polymer microparticles prepared according to Embodiment 1 of the present application.
FIG. 13 is a crossed polarized microscopy image of polymer microparticles prepared according to Embodiment 2 of the present application.
FIG. 14 is a crossed polarized microscopy image of polymer microparticles prepared according to Embodiment 6 of the present application.
FIG. 15 is a crossed polarized microscopy image of polymer microparticles prepared according to Comparison Example 4 of the present application.
FIG. 16 is a pressure-flow rate curve of the chromatographic columns prepared in some embodiments and comparative examples.

### DESCRIPTION OF PREFERRED EMBODIMENTS

In order to make the objects, technical solutions and advantages of the present application clearer, the technical solutions of the present application will be clearly and completely described in the following with reference to the embodiments of the present application. It is apparent that the described embodiments are a part of the embodiments of the present application, rather than all of the embodiments. All other embodiments obtained by those skilled in the art based on the technical solutions and embodiments provided by the present application and without the creative work are all within the scope of the present application.

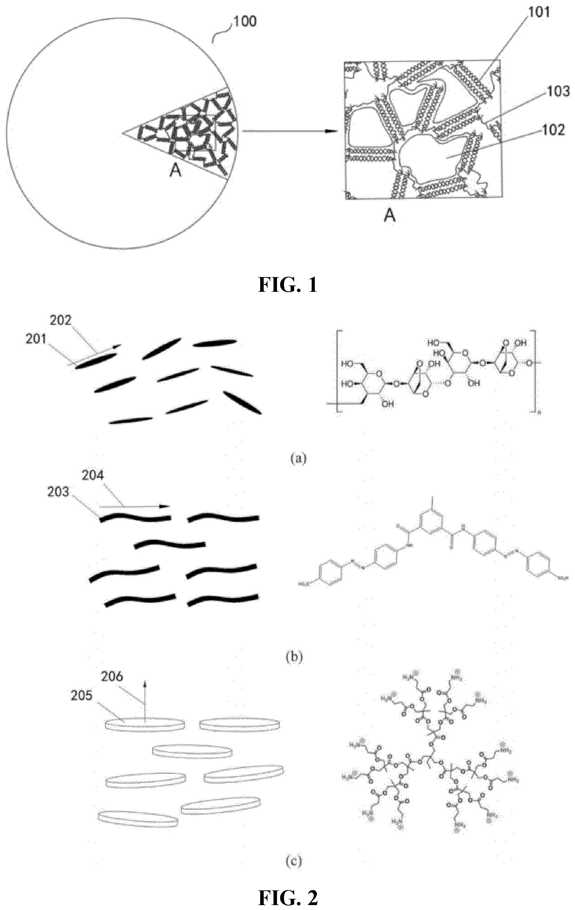

One preparation method for porous microspheres known in the prior art which is suitable for use in a chromatography column consists of dispersing polysaccharide molecules (such as agarose) in water. Moreover, the polysaccharide-containing tiny aqueous droplets suspended in the oil phase are formed by appropriate emulsification techniques. Referring to FIG. 1, after the temperature of the emulsion is cooled, the single chain of the polysaccharide compound 101 forms a double helices structure, and then pore 102 are formed between the molecular beams, and finally, the microspheres 100 are formed with the aid of crosslinking agent 103. As the polysaccharide molecules are disorderly arranged in water, the internal pores of the microspheres thus formed are also arranged ordered randomly, and given the inherent soft characteristics of the polysaccharide molecules, the microspheres cross-linked are usually relatively soft.

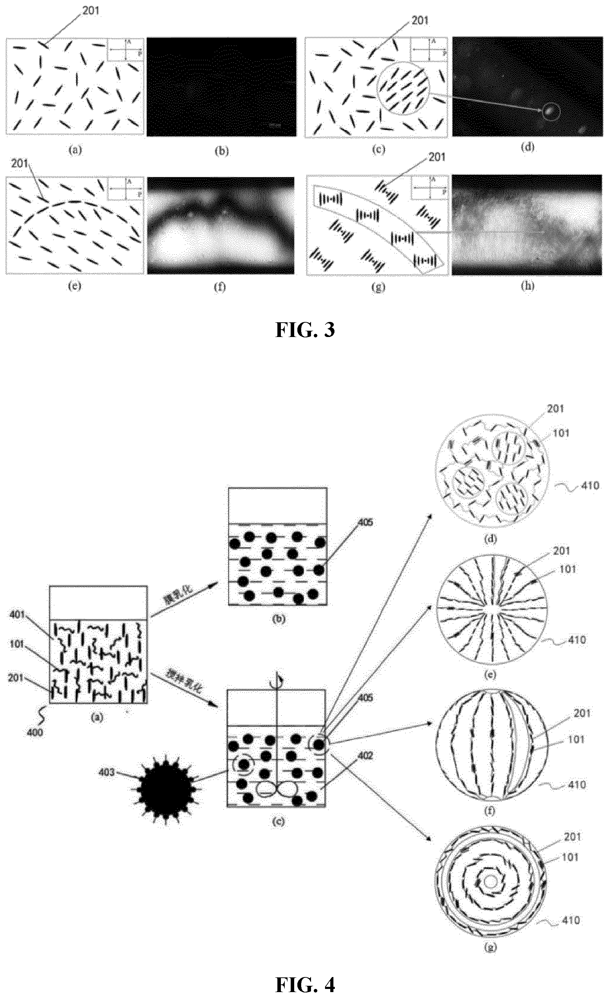

Many biomacromolecules in nature are independent or dispersed in water to present a non-spherical, symmetrical, rigid form, as shown in FIG.2, including a rod-like shape shown on the left side of FIG. 2(a), such as tobacco mosaic virus (TMV), deoxyribonucleic acid (DNA), cellulose nanocrystals (CNC, schematic and structural formulas shown in the right side of FIG.2(a)), and 2, 3, 6, 7, 10, 11 - six (1,4,7 - trioxylalkyl-benzo [ 9,10 ] phenanthrene 7) (TP 6EO2M, schematic diagram and structural formula shown in the right side of FIG. 2 (C)) having a disc shape shown on the left side of FIG. 2(c), and the like. The tobacco mosaic virus is a rigid rod-like biological nanoparticle that is widely studied in liquid crystal physics. According to the lyotropic liquid crystal theory, when such rigid nanoparticles are dispersed in a solvent, the rigid nanoparticles may be arranged disorderly in the solvent or in an ordered molecular arrangement of some kind of lyotropic liquid crystals such as a nematic phase (such as a tobacco mosaic virus nanomaterial), a near-crystalline phase, a cholesteric phase, and a columnar phase liquid crystal, depending on the concentration and the characteristics of the rigid nanoparticles. Liquid crystal materials ordered usually exhibit optical birefringence, so the ordered droplets or solvents containing non-spherical biomacromolecules are clearly visible under a polarizing microscope, and a common liquid crystal conformation is presented, as shown in FIG. 3.

More particularly, in accordance with the spirit of this application, using non-spherical rigid nanoparticles, it would be possible to prepare the porous polymer microparticles where the orientation of the nanoparticles are ordered and the pore structures are controllable, and the microparticles have excellent mechanical properties.

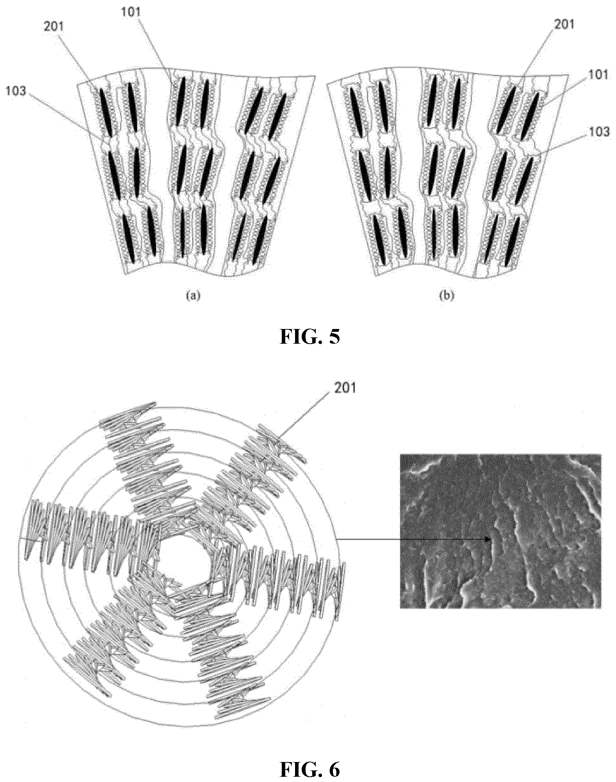

As shown in FIG. 4, in accordance with the spirit of this application, an appropriate amount of rigid nanoparticles having non-spherical shape are uniformly dispersed in the solvent 401 alone or with an appropriate amount of amorphous monomers or oligomers 101, to form the lyotropic liquid crystal solution 400 having local or overall molecular orientation ordering as shown in FIG. 4 (a). The lyotropic liquid crystal solution 400 forms an emulsion containing the lyotropic liquid crystal droplets 405 suspended in the solvent 402 by an appropriate emulsification method, including the membrane emulsification shown in FIG. 4 (b) or stirring to emulsify (FIG. 4 (c)) by adding a solvent 402 immiscible with the lyotropic liquid crystal solution and the emulsifier 403, etc. The monomers or oligomers and the rigid nanoparticles with polymerizable functional groups are polymerized to form a polymer network structure, thereby forming porous polymer microspheres as shown in FIGS.4(D), (E), (F), and (G), which contain rigid nanoparticles and the rigid nanoparticles with at least partially form ordered structures in it, that is, the polymer microparticles 410. The rigid nanoparticles may be physically wrapped in the polymer microspheres by the surrounding polymer in the polymer microparticles 410, as shown in FIG. 5 (b), and may also directly participate in the cross-linking reaction, and become part of the polymer via chemical bonding, as shown in FIG. 5 (a).

In accordance with the spirit of this application, when the rigid nanoparticles are biomacromolecules, porous biomacromolecule polymer microspheres have at least partially ordered molecules and ordered pore structures.

Specifically, cellulose nanocrystals CNC having a suitable aspect ratio and size distribution are biomacromolecules that have certain rigidity in their solvent water and can form a lyotropic liquid crystal phase. In accordance with the spirit of this application, when the biomacromolecules are cellulose nanocrystals (CNC) and as its concentration reaches a critical concentration, the CNC molecules may be self-assembled to form an ordered structure, thereby showing the liquid crystal phase. As shown in FIG. 3 (a, b), for the CNC nanomaterial with a specific aspect ratio, there is no orientation ordering of the CNC nanomaterials for CNC concentration below 3%, then it does not have a liquid crystal phase and the corresponding solvent does not show the birefringence characteristic under a polarization microscope, and the picture presents a uniform dark state. As shown in FIG. 3 (c, d), when the concentration of the CNC dispersion is between 3.5% and 4%, a fluctuation of the ordered domain may occur due to insufficient or fluctuation in local concentrations of the dispersion. As shown in FIG. 3 (e, f), biomacromolecules can be regularly arranged in a liquid crystal phase state as the concentration of CNC dispersion is higher than critical concentration of 4%, then to form an ordered structure. As shown in FIG. 3 (g, h), since the CNC biomacromolecules have chiral characteristics, the chiral characteristics of the biomacromolecules can be clearly shown to form a cholesteric phase molecule arrangement with a spiral structure when the concentration of the dispersion is about 5%. When the concentration of the CNC dispersion is higher than 6%, the arrangement of the biomacromolecules is more orderly. When the aspect ratio and uniformity of the CNC nanomaterial are changed, the corresponding critical concentration is also changed. At the same time, since the cellulose nanocrystals (CNC) biomacromolecules are chiral, the ordered structures of molecular can form a liquid crystal molecule arrangement having a helical structure, as shown in FIG. 6.

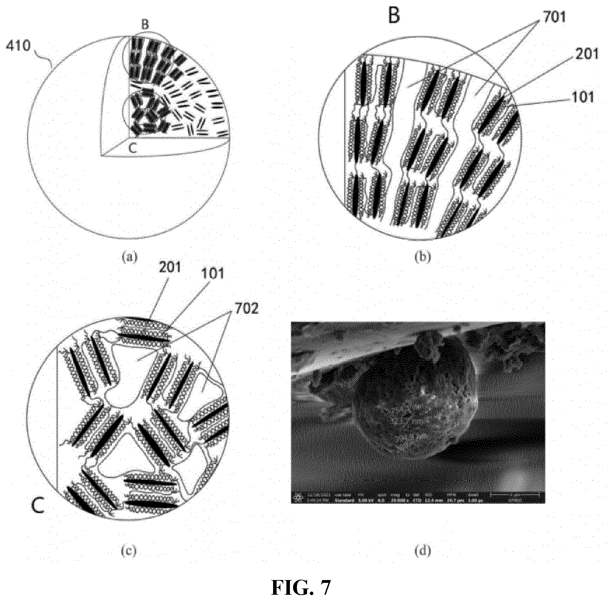

FIG. 7 is a polymer microparticle having a porous structure according to the present application. Specifically, FIG. 7 (a) shows a diametrical cross-section of the partial interior space of the polymer microsphere. The biomacromolecules may still remain an orderedstructure at least in part after crosslinking, and due to the influence of the molecular arrangement, the pore structure formed may also be partially ordered, as shown in FIG. 7 (b). The biomacromolecule solution shown in FIG. 7 (a) may be emulsified to form droplets when it may also be in a local ordering state, and the biomacromolecules 201 within the emulsion also similarly tend to be partially ordered as shown in FIG. 7 (a). When the temperature of emulsion is lowered, the biomacromolecules 201 retain the alignment and further cross-linked to form polymer microparticles, then the internal structure at least partially retains the previously ordered conformation, and at the same time, as shown in FIG. 7 (b), the pores 701 formed between the biomacromolecules basically inherit the same ordered conformation so that the pores of the formed polymer microparticles at least partially form a substantially ordered structure. The phrase "substantially ordered" refers to that at least in a substantially ordered area, at least a portion of the pore and at least a portion of its adjacent one has a certain correlation with the arrangement of their directions and positions. Specifically, at least in a substantially ordered area, at least a portion of the pore is substantially parallel, fan-shaped, or spirally arranged with at least a portion of its adjacent one. As shown in FIG. 7(d), as a preferred embodiment, the pore diameter is 1-1000 nm.

In accordance with the spirit of this application, the substantially ordered structures of biomacromolecules in the emulsion may include one or more regions by controlling its concentration. Meanwhile, the molecular arrangement between the plurality of regions may not be correlated, correlated, or partially correlated. Moreover, the substantially ordered structures may be overall ordered, or may be partially ordered. When in overall ordered form, in a substantially ordered region, the distribution of the feature direction of the biomacromolecule is any one of substantially along the particle radius direction, along the particle bipolar axis direction, or in a plurality of concentric circles inside the microparticles. When in partially ordered form, in a substantially ordered region, the feature direction of the biomacromolecule is substantially parallel, fan-shaped, or spirally arranged.

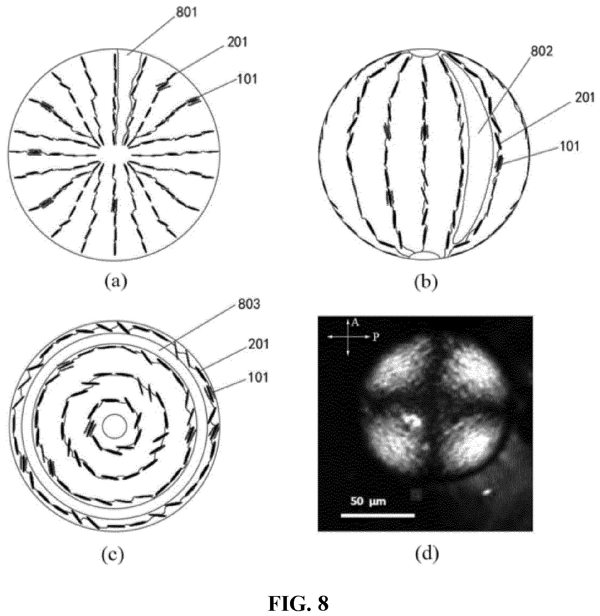

Within the overall ordered range, some special conformations may be formed structurally due to these substantially ordered structures, including the radial configuration (the feature direction is arranged in order along the radius direction), and ordered pores 801 are formed with its directions point at the circle center, as shown in FIG. 8 (a), and the bipolar configuration as shown in FIG. 8 (b) (the feature direction is arranged in order along the bipolar direction), and ordered pores 802 are formed inside which is along the direction of the bipolar axis, and the loop conformation as shown in FIG. 8 (c) (the feature direction is in concentric circle arrangement), and ordered pores 803 are formed inside whose arrangement is a concentric circle arrangement, however, this disclosure is not limited thereto, and it may also be other ordered conformation. At the same time, due to the optical birefringence characteristic generally possessed by biomacromolecules, these special conformations show a special optical phenomenon under a polarizing microscope. For example, as shown in FIG. 8 (a), the feature direction of the biomacromolecules tends to be arranged in order along the radius direction in the emulsion drops, and the interior structure and the pores of the polymer microparticles formed thereby also tend to be arranged in order along the radius direction, thus having a radial configuration and showing an optical anisotropy of Maltese black cross under a polarizing microscope, as shown in FIG. 8(d).

Within the partially ordered range, as shown in FIG. 7 (a), the external region of the polymer microparticles comprises multiple parts B, as shown in FIG. 7(b) and multiple parts C as shown in FIG. 7(c). The part B is a local region with the feature direction of the biomacromolecule substantially ordered, and the part C is a disordering region for the feature direction of the biomacromolecule. An ordered pore 701 and a disordered pore 702 are formed inside the polymer microparticles at the same time. Even though the polymer microparticles do not have a specific conformation, the feature directions of the polymer microparticles are still regularly arranged in a small area, and color development can still be observed under a polarizating microscope.

In accordance with the present invention, it would be possible to prepare the biomacromolecule droplets of different sizes and partially ordered structures, which are then crosslinked to form the polymer microparticles that is at least partially ordered on the molecular and pore structural scale. In a preferred embodiment, the average particle size of the polymer microparticles in the solvent, which is usually an aqueous solvent, is 1-500 microns. More preferably, the average particle size is 5-150 microns. When used as fillers for chromatography columns, very small particles will lead to a high back pressure, and very large particles will lead to low separation efficiency.

In accordance with the spirit of this application, the polymer microparticle 410 which is formed by crosslinking at least partially cross-linkable oligomer materials including rigid nanoparticles 201, wherein at least one of the rigid nanoparticles has a non-spherical shape in a solution. As shown in FIG. 2(a), the biomacromolecule 201 is a rod shaped molecule with a feature direction 202 in the direction of the longitudinal axis of the molecule. As shown in FIG. 2(b), the biomacromolecule 203 is a bow-like shaped (banana shaped) molecule with its feature direction 204 in the direction of the longitudinal axis of the molecule, or as shown in FIG. 2(c), the biomacromolecule 205 is a disk-like shaped molecule with a feature direction 206 perpendicular to the disk, the biomacromolecule can also be but is not limited to the form of slice, needle or wire, other suitable non-spherical biomacromolecule can also be used.

Biomacromolecules with or without spherical shapes are selected from at least one of a polypeptide (e.g., insulin, growth hormone), a protein (e.g., chloroplastin, collagen, etc.), a nucleic acid (e.g., DNA), a polysaccharide (e.g., cellulose, chitosan), and a lipid (e.g., monoglyceride, phospholipid, glycolipid, steroid, etc.). These biomacromolecules are commonly found in organism, and are mostly in a rod shape or a flat shape in the solution. In a preferred embodiment, as shown in FIG. 6, the biomacromolecules may or may not be chiral. Further, the biomacromolecules with chiral characteristics include left- and right-handed biomacromolecules, and the formed liquid crystal phases may form a cholesteric helical structure. As illustrated in the corresponding part of the SEM photographs with arrow in Fig.4, the broken parts of the polymer microparticles exhibit a helical ribbon-like internal structure. One specific embodiment of the present application is a biomacromolecule cellulose nanocrystal (CNC), and the structural formula is shown below.

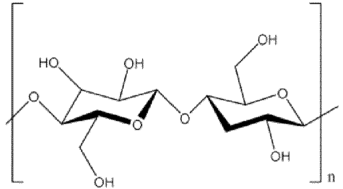

The rod-shaped biomacromolecules has a larger aspect ratio, and is easier to form a liquid crystal state. As a further preferred embodiment, the cellulose nanocrystal has a length of 20-1000 nm, a width of 2-100 nm, and an aspect ratio of 1:5-1: 200.

As shown in FIG. 7 (b), the polymer microparticles may further include a polysaccharide compound 101 having a non-spherical shape, and these polysaccharide compounds and the biomacromolecules are copolymerized to form the polymer microparticles. These polysaccharide compounds are selected from at least one member of agar, agarose, glucan, starch, chitosan and trehalose. In detailed embodiments of the present application, the polysaccharide compound is agarose with the following structural formula:

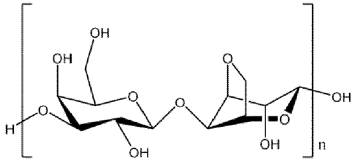

The polysaccharide compound is a gel-like dispersion that can flow prior to emulsification. After the dispersion is emulsified into emulsion droplets, as shown in FIG. 7 (b), a double helix of the polysaccharide compound 101 was formed by its single chain through the processes of cooling, curing, aging, and the like, and therefore forms a bundled molecular structure that ultimately forms soft but stable solid porous particles. Although these polysaccharide compounds are not self-orderly arranged in the solution, they will arrange along with the biomacromolecules because of a variety of interactions between these polysaccharide compounds and the biomacromolecules, including hydrogen bonds, and eventually form an ordered structure. At the same time, in some cases, the biomacromolecules are partially ordered to form a liquid crystal state at a specific concentration, and the polysaccharide compounds will be arranged according to the arrangement of biomacromolecules as a template. These polysaccharide compounds and biomacromolecules are further copolymerized under the assistance of a cross-linking agent to form a stable particle structure but not to destroy the ordered structure of the polymer microparticles, thereby further improving the pressure resistance of the formed polymer microparticles. Meanwhile, in the preparation process of the polymer microparticles, the polysaccharide compound (such as agarose) can solidify the emulsified emulsion by cooling to provide structural support for the subsequent cross-linking polymerization, thereby simplifying the preparation process.

In accordance with the spirit of this application, the present application further provides a method for preparing the polymer microparticles, and the specific process is described as follows:

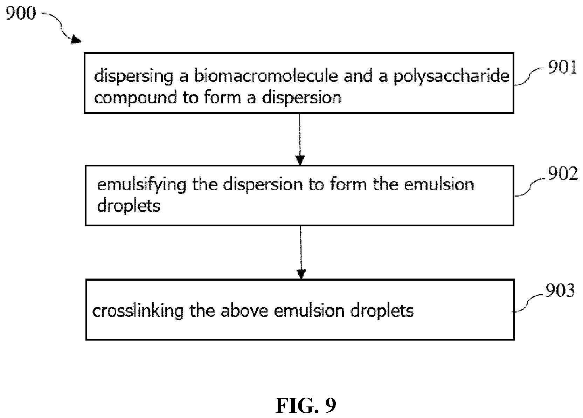

As shown in FIG.9, an embodiment of the present application may include a method 900 of preparing the polymer microparticles. The method may include dispersing a biomacromolecule and a polysaccharide compound to form a dispersion 901, specifically, dispersing the biomacromolecule and the polysaccharide compound in water to form a dispersed phase solution. By controlling the parameters of the specific biomacromolecule, including its aspect ratio, size distribution, etc. and the concentration in water thereof, it is possible to control the biomacromolecules to form an ordered or disordered state in the solvent. As a preferred embodiment, the solid contents of the dispersions containing a mixture of the biomacromolecule and the polysaccharide compound is 2%-90%, and the volume of the biomacromolecule and the polysaccharide compound is in the range 1%-10% of the total volume of the polymer microparticles. Further, mechanical property includes pressure resistance of the polymer microparticle can be further regulated by adjusting the mass ratio of the biomacromolecule and the polysaccharide compound. As a preferred embodiment, the mass ratio of the biomacromolecule and the polysaccharide compound is 1:10-50:1. As a further preferred embodiment, the mass ratio of the biomacromolecule and the polysaccharide compound is 1:1-15:1.

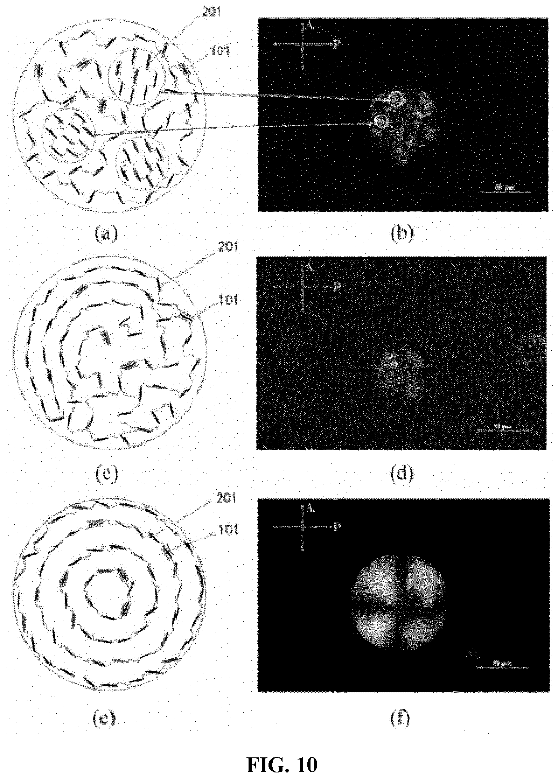

Second, the method 900 further comprises the step of emulsifying the dispersion to form the emulsion droplets 902. Various methods for emulsification exist, including membrane emulsification. The membrane emulsification method refers to a method of forcing a dispersion phase into a continuous phase directly through the pores of a microporous membrane, and then the emulsion droplets are formed and extruded at the end of the pores in a process of emulsification. Another common emulsification method involves dispersing a dispersed phase solution formed by a co-dispersing solution of biomacromolecule and a polysaccharide compound in a continuous phase containing emulsifying agents, to form the emulsion droplets containing biomacromolecules. The emulsifying agents utilized in the above process may be sorbitol esters based (SPAN) surfactants such as sorbitan monopalmitate (SPAN 40), sorbitan monostearate (SPAN 60), sorbitan tristearate (SPAN 65), sorbitan monooleate (SPAN 80), sorbitan trioleate(SPAN 85) and the like. It can also be Tween surfactants such as Tween20, Tween 40, Tween 60, Tween 80 or Tween 85. It can further be a cetyl alcohol, polyglyceryl polyricinoleate (PGPR), and the like. The continuous phase is an oily substance that is incompatible with the water and can dissolve the emulsifier, such as linear alkanes (such as n-hexane, n-hexadecane, etc.), liquid paraffin, animal or vegetable greases (such as soybean oil). The emulsifiers can facilitate the formation of dispersions of emulsion droplets, and meanwhile, it can also assist with arranging the biomacromolecule in order and preparing the emulsion droplets with different orientational effect by controlling the temperature and the orientation time, and further prepares the polymer microparticles with the corresponding orientation effect. As shown in FIG. 10 (a) and FIG. 10 (b), most of the nanorods in the particles are arranged in a disordered configuration and the nanorods in few regions are ordered. Only a small part of the sheet-like region displays a bright state under a polarization microscope, and then the whole picture presents an uneven dark state. As shown in FIG. 10 (c) and FIG. 10 (d), part of nanorods in the particles are arranged in a disordered configuration, while other regions are ordered, and then unobvious birefringence property begins to be presented. As shown in FIG. 10 (e) and FIG. 10 (f), the nanorods in the particles are arranged in a plurality of concentric circles, or may be arranged in other overall ordered manner, and the polymer microspheres show a radial optical anisotropy (Maltese Black Cross) under polarized light. As a preferred embodiment, the mass concentration of the emulsifier in the continuous phase is 2% -20%. The ratio of the dispersed phase to the continuous phase is preferably 1:1 to 1:15. The dispersion modes may be a common emulsification-diffusion process, such as stirring method, ultrasonic method, and vibration method.

Finally, the method 900 comprises the step of crosslinking the above emulsion droplets 903. The specific process is to add a cross-linking agent to the emulsion droplets formed in step 902 to crosslink biomacromolecules in the emulsion, finally forms the polymer microparticles, wherein the crosslinking agent is selected from epoxide, diacid chloride or halogen compound. In one specific embodiment of the present application, the epoxide is glycerol ethers small-molecule organic compound.

When the crosslinking agent is an epoxide, the crosslinking process is as follows:

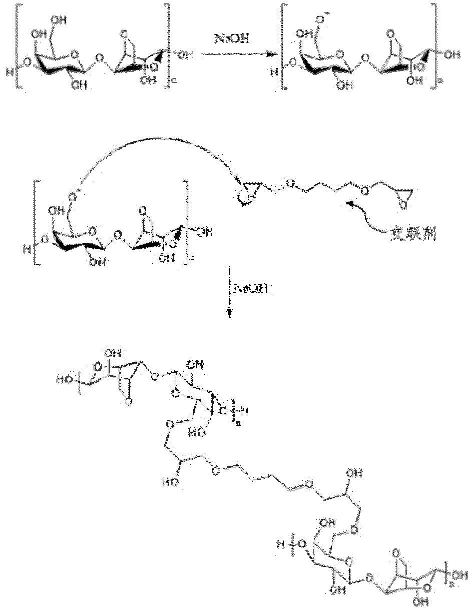

When the crosslinking agent is a halogen compound, the crosslinking process is as follows:

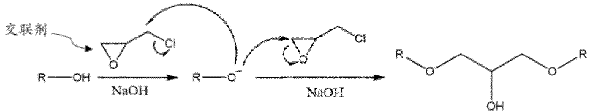

Since the surface of the biomacromolecules have numerous hydroxyl groups, which can be further capable of undergoing a cross-polymerization reaction with the aid of the crosslinking agent, and finally form stable polymer microparticles. At the same time, the pore structure formed in the emulsification process is reinforced. Since the ordered molecular arrangement of the biomacromolecules before crosslinking, the finally formed pore also tend to have the same ordered molecular arrangement that further form an ordered internal structure and pore distribution. As a preferred embodiment, cross-linking is carried out in basic condition, and that make the crosslinking agent more conducive.

The above polymer microparticles having a porous structure may be used for biochemical separation, in particular as the stationary phase for a column chromatography. When a mobile phase passes through the column, the constituents in the mobile phase will interact with the stationary phase, and the size of the constituents, the pore size and its distribution of the stationary phase, and the affinity of the constituents in the mobile phase to the stationary phase all contribute to when and how a specific component passes through the column, and thereby achieving separation of the contuents in the mobile phase. Since the microparticles according to the present invention are comprised of biomacromolecules, chromatography columns made using such microparticles show good bio-compatibility with bio-materials such as proteins to be separated. Additionally, due to the internal ordering of the molecules and pores in the microparticles, the constituents in the mobile phase may have a less tortuous path, there can be an improved separation efficiency when compared with like columns using microbeads with no internal structural ordering.

In order to further achieve the object of the present application, the present application further provides another application scenario of the above polymer microparticles, specifically, an in-situ polymerization is conducted by adding cross-linking agent directly rather than performing emulsification after the dispersed phase solution is formed, the output of which can be used as stationary phase for monolithic media chromatography.

The structure, optical performance, and preparation method of the polymer particles will be described in detail below with reference to specific embodiments. Unless otherwise specified, mass ratio between different components will be used in the exemplary embodiments described below.

### Example 1

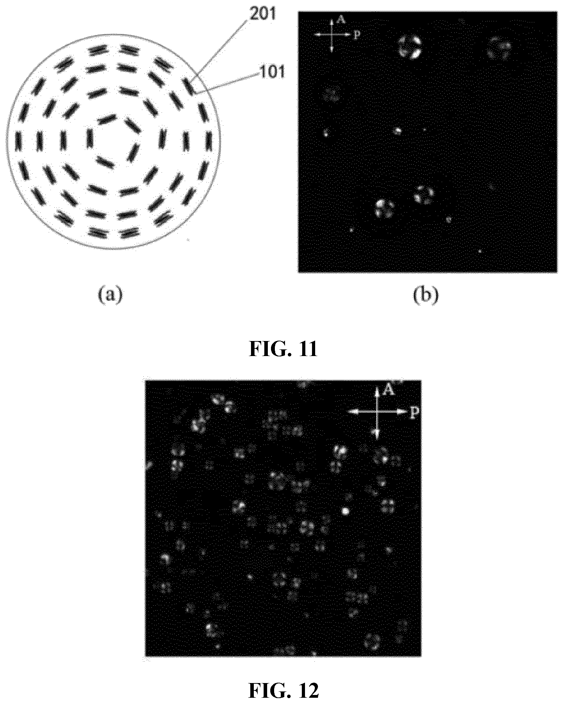

0.6 grams of cellulose nanocrystals and 0.06 grams of agarose were dispersed in 14.34 grams of water during the reaction, the mixture was stirred at 90°C, forming a suspension. The suspension was poured into 150 grams of liquid paraffin containing SPAN80 (10 percent by mass concentration) and were emulsified by stirring at 80°C for 2 mins, and cooled to form the dispersion containing cured emulsion droplets. FIG. 11 (a) shows that cellulose nanocrystals and agarose molecules are arranged in a plurality of concentric circles inside the emulsion droplet. FIG. 11 (b) shows that these emulsion droplets have a Maltese black cross under a polarizing microscope. The dispersion was washed to eliminate the emulsifier and liquid paraffin, and the resulting gel was then weighed and poured into 10 ml of aqueous solution containing 500 microliters of the crosslinker pentaerythritol tetraglycidyl ether, and the mixture was stirred for 12 hours. The system was added with 500 microliters of aqueous solution containing 40wt% sodium hydroxide and 5wt% sodium borohydride, and the mixture was stirred for 8 hours. 500 microliters of epichlorohydrin and 500 microliters of aqueous solution containing 40wt% sodium hydroxide and 5wt% sodium borohydride were mixed and added to the reaction mixture, and the mixture was stirred for 12 hours. The resulting polymer microparticles were washed until pH neutral, whose optical properties were shown in FIG. 12. The polymer microspheres show a radial optical anisotropy (Maltese Black Cross) under a polarizing microscope, demonstrating it has radial internal configuration and radial pore distribution.

### Example 2

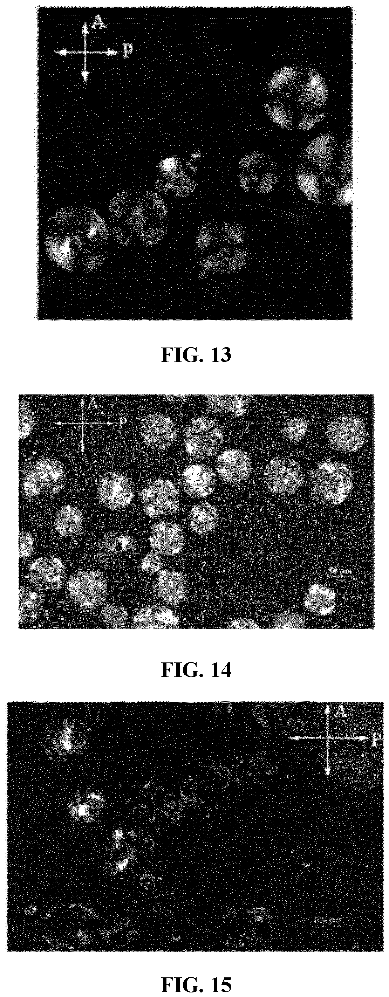

0.4 grams of cellulose nanocrystals and 0.2 grams of agarose were dispersed in 9.4 g of water during the reaction, the mixture was stirred at 90°C, forming a suspension. The suspension was poured into 100 grams of liquid paraffin containing SPAN80 (10 percent by mass concentration) and were emulsified by stirring at 80°C for 2 mins, and cooled to form the dispersion containing cured emulsion droplets. The dispersion was washed to eliminate emulsifier and liquid paraffin, and the resulting gel were then weighed and poured into 10 ml of aqueous solution containing 500 microliters of the crosslinker 1,4-butanediol diglycidyl ether, and the mixture was stirred for 12 hours. The system was added with 500 microliters of aqueous solution containing 40 wt% sodium hydroxide and 5 wt% sodium borohydride, and the mixture was stirred for 8 hours. 500 microliters of epichlorohydrin and 500 microliters of aqueous solution containing 40 wt% sodium hydroxide and 5 wt% sodium borohydride were mixed and added to the reaction mixture, and the mixture was stirred for 12 hours. The resulting polymer microparticles were washed until pH neutral, whose optical properties were shown in FIG. 13. The polymer microspheres show a radial optical anisotropy (Maltese Black Cross) under a polarizing microscope, demonstrating it has radial internal configuration and radial pore distribution.

### Example 3

0.6 grams of cellulose nanocrystals and 0.9 grams of agarose were dispersed in 13.5 grams of water during the reaction, the mixture was stirred at 80 °C, forming a suspension. The suspension was poured into 150 grams of liquid paraffin containing SPAN80 (10 percent by mass concentration) and were emulsified by stirring at 80 °C for 2 mins, and cooled to form the dispersion containing cured emulsion droplets. The dispersion was washed to eliminate emulsifier and liquid paraffin, and the resulting gel were then weighed and poured into 15 ml of aqueous solution containing 800 microliters of the crosslinker 1,4-butanediol diglycidyl ether, and the mixture was stirred for 12 hours. The system was added with 800 microliters of aqueous solution containing 40 wt% sodium hydroxide and 5 wt% sodium borohydride, and the mixture was stirred for 8 hours. 800 microliters of epichlorohydrin and 800 microliters of aqueous solution containing 40 wt% sodium hydroxide and 5 wt% sodium borohydride were mixed and added to the reaction mixture, and the mixture was stirred for 12 hours. The resulting polymer microparticles were washed until pH neutral. The polymer microspheres show a radial optical anisotropy (Maltese Black Cross) under a polarizing microscope, demonstrating it has radial internal configuration and radial pore distribution.

### Example 4

0.4 grams of cellulose nanocrystals were dispersed in 9.6 grams of water during the reaction, the mixture was stirred at room temperature, forming a suspension. One gram of the suspension was measured and added to 10 grams of soybean oil containing PGPR (2 percent by mass concentration) and were emulsified for 3 hours by stirring, forming a dispersion containing emulsion droplets. 400 microliters of cross-linking agent 1,4-butanediol diglycidyl ether was dispersed in 900 microliters of water, and were slowly added to the dispersion, and mixture was stirred at room temperature for 12 hours. 400 microliters of aqueous solution containing 40 wt% sodium hydroxide and 5 wt% sodium borohydride were mixed and added to the reaction mixture, and the mixture was stirred for 12 hours. 400 microliters of epichlorohydrin and 800 microliters of aqueous solution containing 40 wt% sodium hydroxide and 5 wt% sodium borohydride were mixed and added to the reaction mixture, and the mixture was stirred for 12 hours. The resulting polymer microparticles were washed until pH neutral. The polymer microspheres show a radial optical anisotropy (Maltese Black Cross) under a polarizing microscope, demonstrating it has radial internal configuration and radial pore distribution.

### Example 5

0.4 grams of cellulose nanocrystals were dispersed in 9.6 grams of water during the reaction, the mixture was stirred at room temperature, forming a suspension. One gram of the suspension was measured and added to 10 grams of soybean oil containing PGPR (15 percent by mass concentration) and were emulsified for 3 hours by stirring, forming a dispersion containing emulsion droplets. 100 microliters of cross-linking agent 1,4-butanediol diglycidyl ether was dispersed in 900 microliters of water, and were slowly added to the dispersion, and mixture was stirred at room temperature for 12 hours. 100 microliters of aqueous solution containing 40 wt% sodium hydroxide and 5 wt% sodium borohydride were mixed and added to the reaction mixture, and the mixture was stirred for 12 hours. 100 microliters of epichlorohydrin were added to the reaction mixture, and the mixture was stirred for 12 hours. The resulting polymer microparticles were washed until pH neutral. The polymer microspheres show a radial optical anisotropy (Maltese Black Cross) under a polarizing microscope, demonstrating it has radial internal configuration and radial pore distribution.

### Example 6

0.4 grams of cellulose nanocrystals and 0.2 grams of agarose were dispersed in 9.4 grams of water during the reaction, the mixture was stirred at 90 °C, forming a suspension. The suspension was poured into 100 grams of liquid paraffin containing Tween 80 (10 percent by mass concentration) and were emulsified by stirring at 80 °C for 2 mins, and cooled to form the dispersion containing cured emulsion droplets. The dispersion was washed to eliminate emulsifier and liquid paraffin, and the resulting gel were then weighed and poured into 10 ml of dioxane solution containing 500 microliters of the crosslinker 1,4-butanediol diglycidyl ether, and the mixture was stirred for 2 hours. The system was added with 500 microliters of aqueous solution containing 40 wt% sodium hydroxide and 5 wt% sodium borohydride, and the mixture was stirred for 8 hours. 500 microliters of epichlorohydrin, 500 microliters of aqueous solution containing 40 wt% sodium hydroxide and 5 wt% sodium borohydride were mixed and added to the reaction mixture, and the mixture was stirred for 12 hours. The resulting polymer microparticles were washed until pH neutral, whose optical properties were shown in FIG. 14. The polymer microspheres show a regional brightness under a polarizing microscope, demonstrating it has partially ordered configuration and partially ordered pore distribution. This is due to the fact that when Tween 80 is used as an emulsifier, the conformational change capability to the cellulose nanocrystal is weak, which is not enough to make the emulsion droplets to show the radical optical anisotropy (Malar black cross) but only enough to show locally birefringence phenomena.

### Comparative Example 1

0.6 grams of cellulose nanocrystals and 0.3 grams of agarose were dispersed in 14.1 g of water during the reaction, the mixture was stirred at 80°C, forming a suspension. The suspension was poured into 150 grams of liquid paraffin containing Tween 80 (10 percent by mass concentration) and were emulsified by stirring at 80 °C for 2 mins, and cooled to form the dispersion containing cured emulsion droplets. The dispersion was washed to eliminate emulsifier and liquid paraffin, and the resulting gel were then weighed and poured into 15 ml of aqueous solution containing 800 microliters of the tetrafunctional crosslinker pentaerythritol tetraglycidyl ether, and the mixture was stirred for 12 hours. The system was added with 800 microliters of aqueous solution containing 40wt% sodium hydroxide and 5wt% sodium borohydride, and the mixture was stirred for 8 hours. 800 microliters of epichlorohydrin, 400 microliters of aqueous solution containing 40 wt% sodium hydroxide and 5wt% sodium borohydride were mixed and added to the reaction mixture, and the mixture was stirred for 12 hours. The resulting polymer microparticles were washed with warm water until pH neutral. The polymer microspheres show a regional brightness under a polarizing microscope, demonstrating it has partially ordered configuration and partially ordered pore distribution.

### Comparative Example 2

0.6 grams of cellulose nanocrystals and 0.3 grams of agarose were dispersed in 14.1 grams of water during the reaction, the mixture was stirred at 80°C, forming a suspension. The suspension was poured into 150 grams of liquid paraffin containing Span 80 (10 percent by mass concentration) and were emulsified by stirring at 80 °C for 2 mins, and cooled to form the dispersion containing cured emulsion droplets. The dispersion was washed to eliminate emulsifier and liquid paraffin, and the resulting gel were then weighed and poured into 15 ml of aqueous solution containing 0.4 grams of the bifunctional crosslinker 1,4-butanediol diglycidyl ether, and the mixture was stirred for 12 hours. The system was added with 400 microliters of aqueous solution containing 40 wt% sodium hydroxide and 5 wt% sodium borohydride, and the mixture was stirred for 8 hours. 0.4 grams of epichlorohydrin, 400 microliters of aqueous solution containing 40 wt% sodium hydroxide and 5 wt% sodium borohydride were mixed and added to the reaction mixture, and the mixture was stirred for 12 hours. The resulting polymer microparticles were washed with warm water until pH neutral. When the amount of the crosslinking agent is low, the crosslinking-degree and pressure resistance of the obtained microspheres are both relatively low.

### Comparative Example 3

0.6 grams of cellulose nanocrystals and 0.3 grams of agarose were dispersed in 14.1 grams of water during the reaction, the mixture was stirred at 80 °C, forming a suspension. The suspension was poured into 150 grams of liquid paraffin containing Span 80 (10 percent by mass concentration) and were emulsified by stirring at 80 °C for 2 mins, and cooled to form the dispersion containing cured emulsion droplets. The dispersion was washed to eliminate emulsifier and liquid paraffin, and the resulting gel was then weighed and poured into 15 ml of aqueous solution containing 9.6 grams of the bifunctional crosslinker 1,4-butanediol diglycidyl ether, and the mixture was stirred for 12 hours. The system was added with 400 microliters of aqueous solution containing 40wt% sodium hydroxide and 5wt% sodium borohydride during the reaction, and the mixture was stirred for 8 hours. 9.6 grams of epichlorohydrin, 400 microliters of aqueous solution containing 40 wt% sodium hydroxide and 5 wt% sodium borohydride were mixed and added to the reaction mixture, and the mixture was stirred for 12 hours. The resulting polymer microparticles were washed with warm water until pH neutral. When the amount of the crosslinking agent is too high, the obtained polymer microparticles are prone to adhering and lumping each other. Moreover, a chemical bond is formed between the cross-linking agent and water, resulting in losses in industrial production.

### Comparative Example 4

0.6 grams of cellulose nanocrystals and 0.3 grams of agarose were dispersed in 14.1 grams of water during the reaction, the mixture was stirred at 60 °C, forming a suspension. The suspension was poured into 150 grams of liquid paraffin containing Span 80 (10 percent by mass concentration) and was emulsified by stirring at 60 °C for 2 mins, and cooled to form the dispersion containing cured emulsion droplets. The dispersion was washed to eliminate emulsifier and liquid paraffin, and the resulting gel was then weighed and poured into 15 ml of aqueous solution containing 800 microliters of the bifunctional crosslinker 1,4-butanediol diglycidyl ether, and the mixture was stirred for 12 hours. The system was added with 40 microliters of aqueous solution containing 40 wt% sodium hydroxide and 5 wt% sodium borohydride, and the mixture was stirred for 8 hours. 800 microliters of epichlorohydrin and 40 microliters of aqueous solution containing 40 wt% sodium hydroxide and 5 wt% sodium borohydride were mixed and added to the reaction mixture, and the mixture was stirred for 12 hours. The resulting polymer microparticles were washed with warm water until pH neutral, whose optical properties are shown in FIG. 15. The crosslinking of the cellulose nanocrystals and agarose is less effective, due to the fact that the cellulose nanocrystals and agarose are not thoroughly mixed and cannot form a liquid crystal phase, and the cross-linking agent also cannot penetrate into the pores of the microspheres.

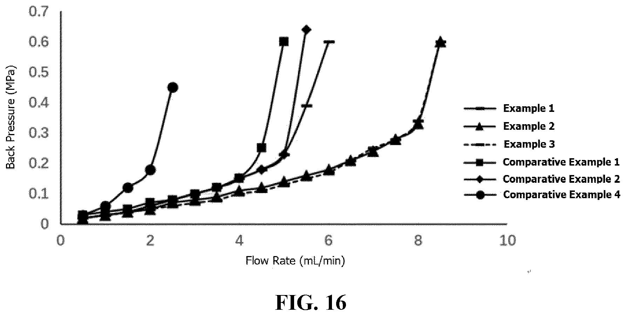

All the microparticles obtained in Examples 1-3 and comparative examples 1, 2, and 4 are screened to retain polymer microparticles having a particle size of 40-150 µm. The microparticles were filled into the chromatographic column by homogenate method, and then a corresponding pressure value is obtained by changing different flow rates on a protein liquid chromatography, and ultimately, a pressure-flow velocity curve is obtained, shown in FIG.16, to explore the critical pressure resistance. As can be seen from the first half of the curve, the pressure in chromatographic column gradually increased with the increase of flow rates, and the relationship between the pressure and the flow rates are linear. When reaches the inflection point, the pressure in chromatographic column no longer increases linearly with the flow rates.

It should be understood that although the examples described above provided certain specific embodiments in accordance with the present invention, those embodiments are exemplary, that such a description manner is only for the sake of clarity, that those skilled in the art should take the description as an integral part, and that the technical solutions in the embodiments may be suitably combined to form other embodiments understandable by those skilled in the art.

The detailed descriptions set forth above are merely specific illustrations of feasible embodiments of the present invention, and are not intended to limit the scope of protection of the present invention. All equivalent embodiments or modifications that do not depart from the art spirit of the present invention should fall within the scope of protection of the present invention.

## Claims

1. Porous polymer microparticles, wherein the polymer microparticles are formed by crosslinking at least partially cross-linkable oligomer materials including rigid nanoparticles, wherein at least one of the rigid nanoparticles has a non-spherical shape in a solution, and the rigid nanoparticles at least partially form a substantially ordered structure in the polymer microparticles.

2. The polymer microparticles according to claim 1, wherein the rigid nanoparticle is a biomacromolecule.

3. The polymer microparticles according to claim 1, wherein the polymer microparticles have one or more regions in which rigid nanoparticles are arranged substantially in order, and the molecular arrangement between the plurality of regions may not be correlated, correlated, or partially correlated.

4. The polymer microparticles according to claim 1, wherein the shape of the non-spherical rigid nanoparticles is rod-shaped, strip-shaped, sheet-shaped, needle-shaped, or linear with its feature direction along the direction of the longitudinal axis of the molecule.

5. The polymer microparticles according to claim 1, wherein the shape of the non-spherical rigid nanoparticles is disk-shaped with its feature direction normal to the disk.

6. The polymer microparticles according to any one of claims 2 to 5, wherein there is internal structural ordering over the whole polymer microparticles.

7. The polymer microparticles according to claim 6, wherein the distribution of the feature direction is any one of substantially along the particle radius direction, along the particle bipolar axis direction, or on a plurality of concentric circles inside the microparticles.

8. The polymer microparticles according to any one of claims 2 to 5, wherein the feature direction is substantially parallel, fan-shaped, or spirally arranged in a substantially ordered region.

9. The polymer microparticles according to claim 2, wherein at least one member of the biomacromolecules is selected from the group consisting of polypeptide, protein, nucleic acid, polysaccharide, and lipid.

10. The polymer microparticles according to claim 9, wherein biomacromolecules with a non-spherical shape have or do not have chiral characteristics.

11. The polymer microparticles according to claim 10, wherein biomacromolecules with chiral characteristics include left- and right-handed enantiomers of a chiral biomacromolecule.

12. The polymer microparticles according to claim 9, wherein biomacromolecules having non-spherical shape are cellulose nanocrystals or cellulose nanofibers.

13. The polymer microparticles according to claim 12, wherein the cellulose nanocrystal has a length of 20 -1000 nm and a width of 2-100 nm.

14. The polymer microparticles according to claim 11, wherein the aspect ratio of the cellulose nanocrystals in the solution is 2:1 to 200:1.

15. The polymer microparticles according to claim 1, wherein the polymer microparticles further comprise a polysaccharide compound having no obvious non-spherical shape in a solution, and the polysaccharide compound and the rigid nanoparticles are copolymerized to form the polymer microparticles.

16. The polymer microparticles according to claim 15, wherein at least one member of the polysaccharide compound is selected from the group consisting of agar, agarose, dextran, starch, chitosan, and trehalose.

17. The polymer microparticles according to claim 15, wherein the mass ratio of the rigid nanoparticles to the polysaccharide compound is 1:10 -50:1.

18. The polymer microparticles according to any one of claims 15 to 17, wherein the solid contents of the resulting dispersion is in an amount from 2 % to 90%, by dissolving the rigid nanoparticles and the polysaccharide compound in water.

19. The polymer microparticles according to any one of claims 15 to 17, wherein the volume of the rigid nanoparticles and the polysaccharide compound account for 1%-10% of the total volume of the polymer microparticles.

20. The polymer microparticles according to any one of claims 15 to 17, wherein the polymer microparticles further comprise a cross-linking agent, wherein the amount of the cross-linking agent is 10%-100% with respect to the total mass of the biomacromolecule and the polysaccharide compound.

21. The polymer microparticles according to claim 20, wherein the cross-linking agent includes one or more selected from the group consisting of an epoxy-based compound, a bis-acid chloride compound, and a halogen compound.

22. The polymer microparticles according to claim 21, wherein the epoxy-based compound is selected from the glyceryl ether small molecule organic material.

23. The polymer microparticles according to claim 1, wherein the polymer microparticles have a particle size ranging from 1 µm to 500 µm.

24. Porous polymer microparticles, wherein the polymer microparticle is at least formed by crosslinking rigid nanoparticles and the interior of the polymer microparticles has a pore structure, wherein at least one of the rigid nanoparticles has a non-spherical shape in a solution, the pores form at least partially a substantially ordered structure and the arrangement direction of the pores is basically consistent with the arrangement direction of the biomacromolecules.

25. The polymer microparticles according to claim 24, wherein the rigid nanoparticle is a biomacromolecule.

26. The polymer microparticles according to claim 24, wherein the pore diameter is 1-1000 nm.

27. The polymer microparticles according to claim 24, wherein at least in a substantially ordered area, at least a portion of the pores and at least a portion of its adjacent one has a certain correlation with the arrangement of their directions and positions.

28. The polymer microparticles according to claim 27, wherein at least in a substantially ordered area, at least a portion of the pores is substantially parallel, fan-shaped, or spirally arranged with at least a portion of its adjacent one.

29. A method of preparing the polymer microparticles comprising the steps of:
(1) dispersing the rigid nanoparticles into water to form a dispersed phase solution;
(2) dispersing the dispersed phase solution in a continuous phase containing an emulsifier to form emulsion droplets containing the rigid nanoparticles;
(3) adding a cross-linking agent to cross-link the biomacromolecules in the emulsion droplet to form the polymer microparticles.

30. The method according to claim 29, wherein the rigid nanoparticle is a biomacromolecule.

31. The method according to claim 29, wherein step (1) herein before described further comprises the step of adding a polysaccharide compound.

32. The method according to claim 29, wherein the mass concentration of the emulsifier in the continuous phase is 2% -20%.

33. The method according to claim 32, wherein the emulsifier comprises one or more selected from the group consisting of Span-type surfactants, tween-type emulsifiers, cetyl PEG, and polyglycerol polyricinoleate (PGPR).

34. The method according to claim 29, wherein the continuous phase comprises one or more selected from the group consisting of n-hexane, n-hexadecane, liquid paraffin, and soybean oil.

35. The method according to claim 29, wherein step (3) hereinbefore described is conducted under basic conditions.

36. The use of the polymer microparticles according to any one of claims 1 to 28 as stationary phases for chromatographic separations.

37. A method of preparing the polymer microparticles according to claim 29, wherein in step(1), no emulsification operation is performed after the dispersed phase solution is formed, the crosslinking agent is directly added for in-situ polymerization, and the obtained product can be used as an integral column stationary phase.
